# EUROPEAN PATENT APPLICATION

(11) **EP 1 859 973 A1**
(43) Date of publication of application: **28.11.2007**
(21) Application number: 07108813.2
(22) Date of filing: 24.05.2007
(51) Int. Cl.: B60G 17/052, B60T 17/06

(54) **Pneumatic spring installation for commercial vehicles**

(30) Priority: 24.05.2006 DE 102006024278
(71) Applicant: IVECO MAGIRUS AG, 89079 Ulm (DE)
(72) Inventor: Stuerner, Johann, 89079 Ulm (DE)
(74) Representative: Borsano, Corrado

(57) **Abstract**

Pneumatic spring installation for commercial vehicles especially lorries which are not designed for the attachment of trailer skips or swap trailers, and which commercial vehicles also have a compressed air-operated brake system with service brake and parking brake as well as a compressed air supply for a trailer, characterised in that the pneumatic spring system (24,26) is connected to the compressed air reservoirs (16,18,20,22) of the braking system for the supply of compressed air.

## Description

The invention concerns a pneumatic spring installation for commercial vehicles especially lorries which are not designed for the attachment of trailer skips or swap trailers, and which commercial vehicles also have a compressed air-operated brake system with service brake and parking brake as well as a compressed air supply for a trailer.

Commercial vehicles with pneumatic suspension on the rear axle or also on the front axle normally have a separate air supply for the pneumatic suspension. This air supply comprises air reservoirs of different sizes which are installed in the chassis. In addition to these air reservoirs for the pneumatic suspension, further reservoirs are required for the supply of the braking circuits, mostly the service brake and parking brake. Moreover, in many cases there are ancillary consumer devices which have to be supplied with compressed air e.g. a pneumatic suspension of the driver's cabin. Commercial vehicles of the type addressed here are also often used as traction vehicles for trailers, so that an air supply must be provided for trailer operation. In conventional vehicles the pneumatic system of the parking brake is sometimes drawn upon to supply the trailer.

For the reasons given, commercial vehicles are often provided with a large number of air reservoirs. The installation costs of the reservoirs are considerable and they have an additional weight which increases the total weight of the vehicle and reduces the transport capacity.

The objective of the invention is to produce a pneumatic spring installation of the type mentioned at the beginning which requires as few air reservoirs as possible.

To achieve the set objective, the pneumatic spring installation according to the invention is characterised in that the pneumatic suspension is connected to the compressed air reservoir of the brake system for its compressed air supply.

The pneumatic spring installation thus has no separate air reservoirs. In fact it is supplied from the air reservoirs of the braking system. In this respect separate air reservoirs can be provided for the parking brake and the service brake.

For vehicles not intended for the attachment of trailer skips or swap trailers, the pneumatic spring installation serves in particular to improve driving comfort and to protect the roadbed.

Changes in the height of the chassis, required, for example, for the coupling and decoupling of a trailer skip or swap trailer, and which can be effected by means of pressure generation in the pneumatic spring bellows, are not customarily necessary for vehicles not designed for the attachment of trailer skips. It is therefore possible to ensure the supply of the pneumatic spring installation by means of the existing air reservoirs of the braking system and, if necessary, by means of the ancillary consumer devices. A separate air reservoir for the pneumatic suspension can be dispensed with. For this reason, savings result which affect not only the costs but also the weight of the vehicle.

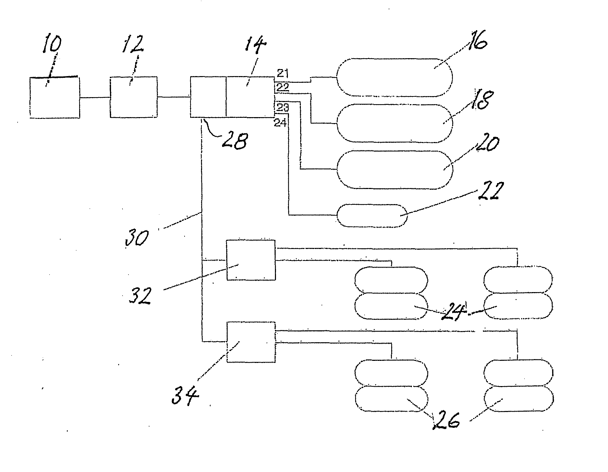

The following explains in more detail, with the aid of the attached drawing, preferred examples of embodiments of the invention.

The only drawing is a schematic representation of the layout of the pneumatic spring installation according to the invention with the air reservoirs for the parking and service brakes and the ancillary consumer devices.

In the drawing, there is a compressor designated 10 which forms the central compressed air source for the entire pneumatic system of the invention. From the compressor the compressed air arrives at a pressure controller 12 which is connected to an air drier and, from here, to a four-circuit safety valve. This safety valve delivers the compressed air to a series of air reservoirs.

To the air reservoirs belong first of all the air reservoirs 16,18 for the braking system, not shown in detail. Furthermore, an air reservoir 20 is provided which serves as supply to the parking brake and a trailer. A smaller reservoir supplies ancillary consumer devices, for example a pneumatic suspension for the driver's cabin.

The pneumatic suspension is embodied by bellows 24,26. This refers to, for example, bellows for the front and rear axles. The bellows 24,26 are supplied with compressed air from safety valve 14, on which a connection 28 is located, from which compressed air can be delivered to the control valves 32,34 of the bellows 24,26 via a pipeline 30.

As long as the compressor 10 is operating, the bellows 24,26 are supplied with compressed air directly via the safety valve 14 and the pipeline 30 as well as the control valves 32,34.

If the compressor 10 is switched off, the pneumatic suspension system is supplied with flow back air out of the air reservoirs via the safety valve 14 and the pipeline 30 with the aid of the existing air reservoirs 16,18,20,22 of the braking system.

This reverse flow of air out of the air reservoirs to the pneumatic suspension system takes place for as long as the air pressure in the air reservoirs maintains a predetermined value. If it falls below this value, the compressor 10 is automatically switched on which at the same time takes over the pneumatic supply to the bellows 24,26.

Thus an adequate supply is guaranteed to all consumers for the entire period of operation.

The solution described here refers to vehicles with conventional air processing, by which an air reservoir is needed for the parking brake or the supply of a trailer.

## Claims

1. Pneumatic spring installation for commercial vehicles especially lorries which are not designed for the attachment of trailer skips or swap trailers, and which commercial vehicles also have a compressed air-operated brake system with service brake and parking brake as well as a compressed air supply for a trailer, **characterised in that** the pneumatic spring system (24,26) is connected to the compressed air reservoirs (16,18,20,22) of the braking system for the compressed air supply.
